**Europäisches Patentamt**

(19) **European Patent Office**

**Office européen des brevets**

(11) **EP 0 294 156 B1**

(12) **EUROPEAN PATENT SPECIFICATION**

(45) Date of publication and mention
of the grant of the patent:
**09.10.1996 Bulletin 1996/41**

(51) Int. Cl.$^6$: **B41M 1/30**

(21) Application number: **88304952.0**

(22) Date of filing: **31.05.1988**

(54) **Method of generating overhead transparency projections using an ink-jet device**

Verfahren zur Herstellung von Transparentfolien durch Tintenstrahlschreiben für die Overhead-
Projektion

Méthode pour la réalisation par jets d'encre de feuilles transparentes pour la projection verticale

(84) Designated Contracting States:
**DE FR GB IT**

(30) Priority: **01.06.1987 US 57132**

(43) Date of publication of application:
**07.12.1988 Bulletin 1988/49**

(60) Divisional application: **95200416.6**

(73) Proprietor: **Hewlett-Packard Company**
**Palo Alto, California 94304 (US)**

(72) Inventors:
• **Morris, Peter C.**
**El Cajon, CA 92026 (US)**
• **Palmer, Donald J.**
**San Diego, CA 92129 (US)**

(74) Representative: **Williams, John Francis et al**
**WILLIAMS, POWELL & ASSOCIATES**
**34 Tavistock Street**
**London WC2E 7PB (GB)**

(56) References cited:
**US-A- 4 087 825          US-A- 4 617 580**

## Description

TECHNICAL FIELD

This invention is related to ink-jet devices, such as ink-jet printers, and, more particularly, to methods of enhancing and optimizing image density on transparent media, such as surface-modified polyester films for use in overhead transparency projection.

BACKGROUND ART

The use of ink-jet printers to form images such as alpha-numeric characters and graphics on absorbent media such as paper is well-known.

However, the use of the same inks on transparent media, such as polyester films, commonly known as Mylar, has not produced the same high optical density of print, which results in intense colors, obtained with inherently absorbent media. As is currently available, such non-absorbing media, even when an "ink-receptive" coating is applied, suffer from inherently long drying times, moisture sensitivity, non-homogeneous area fill, and low optical densities.

Attempts have been made to remedy the situation in which ink-jet transparencies are slow to dry or lack capacity to absorb sufficient volumes of ink, with a goal of approaching performance obtained with highly absorbent media. One such attempt is described in a technical paper by D. R. Titterington et al, "Development of a Transparent Receiving Sheet for Ink-Jet Printing", Journal of Imaging Science, Vol. 30, No. 1, pp. 4-8 (Jan/Feb 1986). This paper describes the use of certain transparent hydrophilic coatings to permit the use of aqueous-based inks for printing on transparent media. However, this reference addresses the problem of slow drying transparencies and does not disclose ways to improve image quality.

While such coatings are useful, considerable work remains to be done to develop suitable inks and methods of application that permit substantially uniform high color density images to be produced on transparent, non-absorbing media approaching that which can be produced on absorbing media such as paper.

US-A-4,540,996 discloses as prior art thereof a method of forming a multicolour image by printing droplets in spaced rows in a first pass and by printing droplets in rows in the spaces formed by the first pass in subsequent passes.

US-A-4,617,580 discloses a method of forming multicolour droplets by printing droplets of one colour in a first pass and partially overlapping these with droplets of a second colour printed in a second pass.

In accordance with the invention, a method is provided for improving the image quality generated on an optically transparent receiver sheet that has been coated with an ink-receptive layer, by the strategic application of individual ink droplets as applied by an ink-jet device. An example of an ink-receptive coating comprises a water-insoluble, polyvinyl pyrrolidone-based hydrophilic coating, available from Arkwright, Inc., Fiskeville, RI, under the trade designation TP161.

Accordingly, the invention provides a method of printing ink droplets as specified in claim 1 and claim 2.

The advantage of the method of the invention is that higher density images can be achieved without suffering from ink coalescence or drip-lines. Thus, for example, overhead transparency projections, such as formed on a polyester (Mylar) film that is coated with an ink-receptive coating, evidence a more homogeneous, higher intensity of color than heretofore obtained.

BRIEF DESCRIPTION OF THE DRAWINGS

FIG. 1a is a diagrammatic, top plan view, showing a series of coalescing drops printed by prior art methods;
FIG. 1b is a diagrammatic, top plan view, depicting the area-fill resulting from the prior art printing methods;
FIG 2a is a diagrammatic, top plan view, showing the pattern of a series of non-coalescing drops, printed in accordance with the invention; and
FIG 2b is a diagrammatic, top plan view, depicting the area-fill resulting from the teaching of the invention.

BEST MODES FOR CARRYING OUT THE INVENTION

A single pass, or scan, of a print head depositing an amount of ink on the afore-mentioned overhead projection transparency receiver sheet yields a non-uniform, low quality image, as a consequence of undesirable drop displacement due to film motion, gravity and drop-to-drop cohesion. The result is a non-homogeneous, low optical density image.

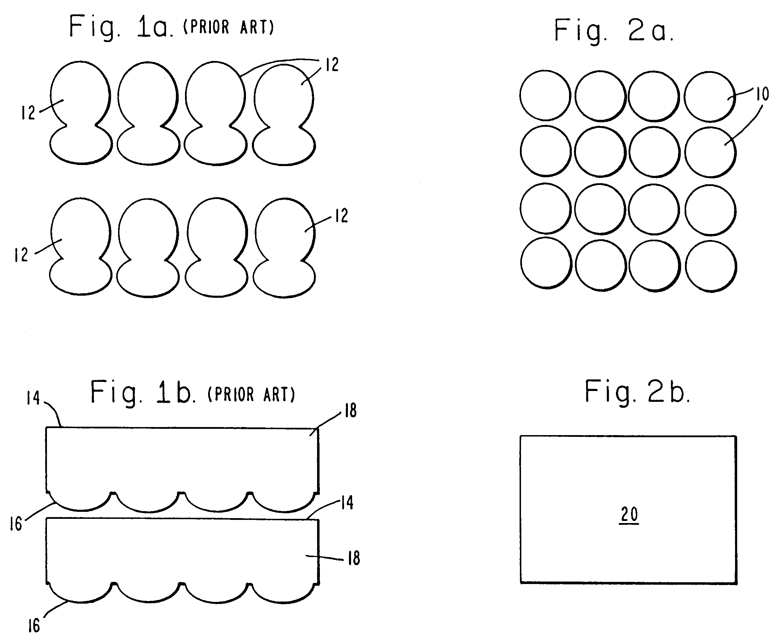

It is observed microscopically that each individual ink-jet droplet 10, printed in a pattern such as shown in FIG. 2a, can coalesce with adjacent droplets to form droplets 12, shown in FIG. 1a, which induce area-fill patterns that are substantially non-homogeneous. Furthermore, under conditions of considerable coalescence and with the overhead projection overhead transparency receiver sheet oriented in a vertical plane during printing, a phenomenon known as "drip lines" is observed. The phenomenon of drip lines is a result of a substantially large volume of ink located on the surface of the transparency receiver sheet which is influenced by gravity. Instead of the preferred absorption of individual droplets into the coated receiver sheet, these large coalesced drops 12 migrate downward along the vertically-oriented page, as shown in FIG. 1a. The result is a notable color striation that exists along each printed swath 18 by virtue of the solid density gradient that results from each drop migration.

In addition, drip lines aggravate the problem of color area-fill homogeneity by preventing the merging of adjacent drops along the top 14 and bottom 16 dot rows of the printed swath 18, as shown in FIG. 1b.

A single scan employing the necessary volume of ink required to avoid drop coalescence should meet the following condition at the time of printing a drop:

$$\varnothing \leq 1/D \qquad \text{Eqn. 1}$$

where $\varnothing$ is the spot diameter and D is the resolution.

However, the volume of ink described by Eqn. 1 may not provide the desired color density for overhead transparency projections. Therefore, in accordance with this invention, the use of at least one successive pass of the ink-jet printing device, where the conditions of Eqn. 1 are met, provides a substantially improved color density.

FIG. 2a shows the printing of dots 10 in accordance with the invention. It will be observed that coalescence is not present. In FIG. 2b, the area-fill pattern 20 is seen to be substantially completely filled and homogeneous, in contrast to the prior art methods resulting in the area-fill depicted in FIG. 1b.

Eqn. 1 may be used to determine the time period for printing two adjacent dots. Such printing may be done at time t=0 up to time t=≈10 sec. Typically, the time dif-ferential is about 2 sec. The governing parameter is that the second drop being printed should not violate Eqn. 1. However, in an area-fill pattern, such as shown in FIG. 2b, at least about 75 % of the applied dots should obey Eqn. 1.

One approach contemplated by the invention involves interleaving dots on one scan line. A pattern of superimposed dots employing both colours together may be formed, alternating the sequence of firing by forming dots of both colours at the same selected locations in a line in a single printhead pass, then scanning the line a second time to form dots of both colours at alternate, or interleaved, locations. Another approach is to print alternate lines. Here, the first third, fifth, etc. lines are printed with superimposed drops, followed by the second, fourth, sixth etc. lines.

For achieving a higher colour density with a single ink, the same methods are employed, namely interleaving superimposed dots on the same rows or between lines.

The method of the invention is applicable to any ink-jet printer, ink and medium combination. The time required between depositing superimposed drops of ink at adjacent locations is readily determined by measuring the time taken for the disappearance of drip lines or coalescence.

Also the method of the invention is applicable to any transparency substrate material, either hydrophilic or hydrophobic, provided Eqn. 1 and the aforementioned condi-tions are obeyed. Examples of suitable media include films of polyesters, cellulose and cellulose acetates, styrenes, polypropylenes, polyvinylchloride, and the like.

## INDUSTRIAL APPLICABILITY

The method of the invention is applicable to forming overhead transparency projections using ink-jet printing.

## EXAMPLES

### Example 1

One embodiment of the disclosed method is to interleave superimposed ink drops. That is, to print every other drop in the first print pass and then print the remaining drops on the subsequent pass.

### Example 2

Another embodiment of the disclosed method has been demonstrated by printing alternating superimposed drop rows in a first pass and then the remaining drop rows in a second pass.

### Example 3

In an alternative method not claimed, full superimposed drop rows are printed, the printhead is then half-stepped and a drop row then printed between the original rows in a second pass.

Thus, there has been disclosed a method of generating overhead transparency projections by ink-jet printers in which a time delay is employed to print adjacent dots of colour.

## Claims

1. A method of printing ink droplets (10) on an ink receptive transparent medium using an ink-jet printer having a printhead with at least two nozzles, wherein each ink droplet is formed by superimposing the output from two nozzles over one another during a single pass of the printhead, wherein an area (20) having a plurality of dot locations in each of a plurality of scan lines is covered by superimposed ink droplets at said dot locations by the step of one or more first passes of the printhead to print a first set of superimposed droplets followed by the step of one or more second passes of the printhead to print a second set of superimposed droplets, wherein said first set of superimposed droplets is printed on each line but at alternate dot locations, the step of said one or more first passes thus leaving unprinted dot location gaps between the superimposed droplets in each line of first superimposed droplets, and wherein said second set of superimposed droplets is printed in said gaps.

2. A method of printing ink droplets (10) on an ink receptive transparent medium using an ink-jet printer having a printhead with at least four nozzles, wherein each ink droplet is formed by superimposing the output from two nozzles over one another during a single pass of the printhead, wherein an area (20) having a plurality of dot locations in each of a plurality of scan lines is covered by superimposed ink droplets at said dot locations by the step of one or more first passes of the printhead to print a first set of superimposed droplets followed by the step of one or more second passes of the printhead to print a second set of superimposed droplets, wherein said first set of superimposed droplets is printed at each dot location on a line but on alternate lines and the printing of droplets at any other location during the or each first pass being suppressed such that droplets to be printed at said other locations are not printed during the or each first pass, the step of said one or more first passes thus leaving unprinted dot location gaps between the alternate lines of first superimposed droplets, and wherein said second set of superimposed droplets is printed in said gaps.

3. A method according to claim 1 or 2, wherein each nozzle outputs different coloured inks.

4. A method according to claim 1 or 2, wherein each nozzle outputs ink of the same colour.

5. A method according to any preceding claim, wherein said medium is selected from the group consisting of polyesters, cellulose and cellulose acetates, polystyrenes, polypropylene, and polyvinylchloride.

6. A method according to any of the preceding claims in which the printed medium is an overhead transparency.

7. A method according to any preceding claim, wherein each ink droplet generated meets the condition $\varnothing \leq 1/D$, wherein $\varnothing$ is the printed ink dot diameter and D represents the resolution.

**Patentansprüche**

1. Ein verfahren des Druckens von Tintentröpfchen (10) auf einem Tinten-aufnehmenden transparenten Medium unter Verwendung eines Tintenstrahldruckers, der einen Druckkopf mit zumindest zwei Düsen aufweist, wobei jedes Tintentröpfchen durch das Überlagern der Ausgabe von zwei Düsen übereinander während eines einzelnen Durchlaufs des Druckkopfs gebildet wird, wobei eine Fläche (20) mit einer Mehrzahl von Punktorten in jeder einer Mehrzahl von Abtastlinien durch überlagerte Tintentröpfchen an den Punktorten bedeckt wird, durch den Schritt eines oder mehrerer erster Durchläufe des Druckkopfs, um einen ersten Satz von überlagerten Tröpfchen zu drucken, gefolgt von dem Schritt eines oder mehrerer zweiter Durchläufe des Druckkopfs, um einen zweiten Satz von überlagerten Tröpfchen zu bilden, wobei der erste Satz von überlagerten Tröpfchen auf jeder Linie, jedoch auf wechselnden Punktorten, gedruckt wird, wobei der Schritt des einen oder der mehreren ersten Durchläufe folglich unbedruckte Punktort-Zwischenräume zwischen den überlagerten Tröpfchen in jeder Linie der ersten überlagerten Tröpfchen beläßt, und wobei der zweite Satz von überlagerten Tröpfchen in die Zwischenräume gedruckt wird.

2. Ein Verfahren des Druckens von Tintentröpfchen (10) auf einem Tinten-aufnehmenden transparenten Medium unter Verwendung eines Tintenstrahldruckers, der einen Druckkopf mit zumindest vier Düsen aufweist, wobei jedes Tintentröpfchen durch das Überlagern der Ausgabe von zwei Düsen übereinander während eines einzelnen Durchlaufs des Druckkopfs gebildet wird, wobei eine Fläche (20) mit einer Mehrzahl von Punktorten in jeder einer Mehrzahl von Abtastlinien durch überlagerte Tintentröpfchen an den Punktorten bedeckt wird, durch den Schritt eines oder mehrerer erster Durchläufe des Druckkopfs, um einen ersten Satz von überlagerten Tröpfchen zu drucken, gefolgt von dem Schritt eines oder mehrerer zweiter Durchläufe des Druckkopfs, um einen zweiten Satz von überlagerten Tröpfchen zu drucken, wobei der erste Satz von überlagerten Tröpfchen an jedem Punktort auf einer Linie, jedoch auf wechselnden Linien gedruckt wird, wobei das Drucken von Tröpfchen an jedem zweiten Ort während des oder jedes ersten Durchlaufs unterdrückt wird, derart, daß Tröpfchen, die an den zweiten Orten gedruckt werden sollen, nicht während des oder der ersten Durchläufe gedruckt werden, wobei der Schritt des einen oder der mehreren ersten Durchläufe folglich unbedruckte Punktort-Zwischenräume zwischen den wechselnden Linien der ersten überlagerten Tröpfchen beläßt, und wobei der zweite Satz von überlagerten Tröpfchen in die Zwischenräume gedruckt wird.

3. Ein Verfahren gemäß Anspruch 1 oder 2, bei dem jede Düse Tinte einer unterschiedlichen Farbe ausgibt.

4. Ein Verfahren gemäß Anspruch 1 oder 2, bei dem jede Düse Tinte der gleichen Farbe ausgibt.

5. Ein Verfahren gemäß einem beliebigen vorhergehenden Anspruch, bei dem das Medium aus der Gruppe ausgewählt ist, die aus Polyestern, Zellulose und Zellulose-Azetaten, Polystyrenen, Polypropylenen und Polyvinylchloriden besteht.

**6.** Ein Verfahren gemäß einem beliebigen der vorhergehenden Ansprüche, bei dem das bedruckte Medium ein Overhead-Transparentbild ist.

**7.** Ein Verfahren gemäß einem beliebigen vorhergehenden Anspruch, bei dem jedes erzeugte Tintentröpfchen die Bedingung $\varnothing \leq 1D$ erfüllt, wobei $\varnothing$ der Durchmesser des gedruckten Tintenpunktes ist und D die Auflösung darstellt.

## Revendications

**1.** Procédé pour imprimer des gouttelettes d'encre (10) sur un support transparent réceptif à l'encre utilisant une imprimante à jet d'encre ayant une tête d'impression avec au moins deux buses, dans lequel chaque gouttelette d'encre est formée par superposition de la sortie de deux buses l'une sur l'autre au cours d'un passage unique de la tête d'impression, dans lequel une zone (20) ayant une pluralité d'endroits pour points dans chacune d'une pluralité de lignes de balayage est recouverte par des gouttelettes d'encre superposées au niveau desdits endroits pour points, par un ou plusieurs premiers passages de la tête d'impression pour imprimer un premier jeu de gouttelettes superposées, puis par un ou plusieurs deuxièmes passages de la tête d'impression pour imprimer un deuxième jeu de gouttelettes superposées, dans lequel ledit premier jeu de gouttelettes superposées est imprimé sur chaque ligne mais en des endroits pour points alternés, le ou les premiers passages laissant ainsi des espaces d'endroits pour points non imprimés entre les gouttelettes superposées dans chaque ligne de premières gouttelettes superposées, et dans lequel ledit deuxième jeu de gouttelettes superposées est imprimée dans lesdits espaces.

**2.** Procédé pour imprimer des gouttelettes d'encre (10) sur un support transparent réceptif à l'encre utilisant une imprimante à jet d'encre ayant une tête d'impression avec au moins quatre buses, dans lequel chaque gouttelette d'encre est formée par superposition de la sortie de deux buses l'une sur l'autre au cours d'un passage unique de la tête d'impression, dans lequel une zone (20) ayant une pluralité d'endroits pour points dans chacune d'une pluralité de lignes de balayage est recouverte par des gouttelettes d'encre superposées au niveau desdits endroits pour points, par un ou plusieurs premiers passages de la tête d'impression pour imprimer un premier jeu de gouttelettes superposées, puis par un ou plusieurs deuxièmes passages de la tête d'impression pour imprimer un deuxième jeu de gouttelettes superposées, dans lequel ledit premier jeu de gouttelettes superposées est imprimé au niveau de chaque endroit pour point sur une ligne mais sur des lignes alternées, et l'impression de gouttelettes sur tout autre endroit au cours du premier passage ou de chaque premier passage étant supprimée, de telle sorte que les gouttelettes à imprimer sur lesdits autres endroits ne sont pas imprimées au cours du premier passage ou de chaque premier passage, ledit ou lesdits premiers passages laissant ainsi des espaces d'endroits pour points non imprimés entre les lignes alternées de premières gouttelettes superposées, et dans lequel ledit deuxième jeu de gouttelettes superposées est imprimée dans lesdits espaces.

**3.** Procédé selon la revendication 1 ou 2, dans lequel chaque buse délivre en sortie des encres de couleurs différentes.

**4.** Procédé selon la revendication 1 ou 2, dans lequel chaque buse délivre en sortie de l'encre de même couleur.

**5.** Procédé selon l'une quelconque des revendications précédentes, dans lequel ledit support est choisi dans l'ensemble constitué par les polyesters, la cellulose, les acétates de cellulose, les polystyrènes, le polypropylène et le poly(chlorure de vinyle).

**6.** Procédé selon l'une quelconque des revendications précédentes, dans lequel le support imprimé est un transparent pour rétroprojection.

**7.** Procédé selon l'une quelconque des revendications précédentes, dans lequel chaque gouttelette d'encre générée satisfait à la condition $\varnothing \leq 1/D$, où $\varnothing$ est le diamètre du point d'encre imprimé et D représente la résolution.

Fig. 1a. (PRIOR ART)

Fig. 1b. (PRIOR ART)

Fig. 2a.

Fig. 2b.